# EUROPEAN PATENT APPLICATION

(11) **EP 4 641 897 A1**
(43) Date of publication of application: **29.10.2025**
(21) Application number: 23909401.4
(22) Date of filing: 26.09.2023
(51) Int. Cl.: H02K 49/10, H02K 3/28, H02K 3/50, B64D 27/24

(54) **AIRCRAFT AND POWER DEVICE THEREOF**

(30) Priority: 25.12.2022 CN 202223463787 U; 28.07.2023 CN 202310937290
(71) Applicant: Autoflight (Kunshan) Co., Ltd., Suzhou, Jiangsu 215345 (CN)
(72) Inventor: TIAN, Yu, Suzhou, Jiangsu 215345 (CN); XI, Jinping, Suzhou, Jiangsu 215345 (CN)
(74) Representative: MERH-IP Matias Erny Reichl Hoffmann Patentanwälte PartG mbB
(86) International application number: PCT/CN2023/121409
(87) International publication number: WO 2024/139466

(57) **Abstract**

The invention relates to the field of aircraft power technology, and discloses an aircraft and a power unit thereof. The power unit of the invention comprises: a stator, comprising at least one pair of stator magnetic assemblies and a bearing sleeve, each of the stator magnetic assemblies comprises a plurality of stator magnetic units, and the stator magnetic units are uniformly arranged circumferentially on the bearing sleeve. A rotor is arranged opposite to the stator and rotatably connected to the stator. The rotor comprises a plurality of rotor magnetic units, and the rotor magnetic units of the rotor are respectively interacting magnetically with each stator magnetic assembly to provide a driving force for the rotor to rotate relative to the stator. The invention achieves a redundant power unit, solving the problem of complete failure in single-motor power unit when power is lost, thereby improving the reliability of the power unit.

## Description

### FIELD OF THE DISCLOSURE

The present invention relates to the field of aircraft power technology, in particular to an aircraft and a power unit thereof.

### BACKGROUND OF THE INVENTION

High reliability of aircraft has always been a key focus in the industry. The high reliability and maneuverability of aircraft largely depend on the reliability of the power unit. Traditional power systems use a single motor and single winding design, but once a failure occurs, the loss of one power output poses significant risks to the aircraft.

### SUMMARY OF THE INVENTION

The purpose of the present invention is to provide an aircraft and a power unit thereof. The present invention achieves a redundant power unit, solving the problem of complete failure in single-motor power units when power is lost, thereby improving the feasibility of the power unit and the reliability of the aircraft.

To address the above technical issues, the present invention provides a power unit, comprising: a stator, comprising at least one pair of stator magnetic assemblies and a bearing sleeve, wherein each of the stator magnetic assemblies comprises a plurality of stator magnetic units uniformly arranged circumferentially on the bearing sleeve;
a rotor, arranged opposite to the stator and rotatably connected to the stator, wherein the rotor comprises a plurality of rotor magnetic units, the rotor magnetic units of the rotor are respectively interacting magnetically with each of the stator magnetic assemblies to provide a driving force for the rotor to rotate relative to the stator.

The present invention further provides an aircraft, comprising the above-mentioned power unit, wherein the power unit is arranged in an arm of the aircraft.

Preferably, the power unit further comprises an electronic speed control (ESC) module, wherein the ESC module comprises at least one pair of ESC units, and the at least one pair of ESC units is connected one to one with the at least one pair of stator magnetic assemblies.

Preferably, the at least one pair of stator magnetic assemblies comprises a first stator magnetic assembly and a second stator magnetic assembly, the first stator magnetic assembly comprises a first stator magnetic unit to a third stator magnetic unit, the second stator magnetic assembly comprises a fourth stator magnetic unit to a sixth stator magnetic unit, with the first stator magnetic unit to the sixth stator magnetic unit arranged circumferentially adjacent to each other on the bearing sleeve.

Preferably, the stator comprises a plurality of terminal posts correspondingly connected to each of the stator magnetic units, and the ESC units comprise a plurality of ESC sockets correspondingly arranged for each of the terminal posts, and the ESC units are configured such that when connected to the stator, the terminal posts are inserted into the corresponding ESC sockets.

Preferably, the rotor comprises a rotating shaft, and the rotor is rotatably connected to the stator through the rotating shaft.

Preferably, the power unit further comprises a stator base, wherein the stator base comprises a first part and a second part, the first part is connected to the bearing sleeve, and the second part is connected to the rotating shaft.

Preferably, the first part of the stator base comprises a plurality of extension brackets, each of the extension brackets is provided with a guide sleeve, and the terminal posts pass through the guide sleeves of the extension brackets.

Preferably, the stator magnetic unit comprises a combination of a plurality of iron core units and coil units, with the coil units arranged circumferentially within the iron core units.

Preferably, an end of the rotor away from the terminal posts is further provided with a heat dissipation part, which dissipates heat from the stator as it rotates with the rotor.

The present invention adopts a single-motor dual-winding design, integrating two power systems into one power unit. The two power systems are connected in parallel, allowing them to operate independently. If one power system fails, the remaining system can continue to function normally, thereby achieving a redundant power unit. This solves the problem of complete failure in single-motor power units when power is lost, improves the feasibility of the power unit, and enhances the reliability of the aircraft.

### BRIEF DESCRIPTION OF DRAWINGS

FIG. 1 is a structural diagram showing the structure of the power unit according to an embodiment of the invention;
FIG. 2 is a cross-sectional view of the power unit according to an embodiment of the invention;
FIG. 3 is a structural diagram showing the structure of the stator magnetic assemblies of the power unit according to an embodiment of the invention;
FIG. 4 is a structural diagram showing the structure of the ESC module of the power unit according to an embodiment of the invention;
FIG. 5 is a schematic diagram showing the arrangement of the stator magnetic units of the power unit according to an embodiment of the invention.

### DETAILED DESCRIPTION

The technical solutions of the invention will be clearly and completely described below in conjunction with the accompanying drawings. Apparently, the described embodiments are part of the embodiments of the invention, but not all of them. Based on the embodiments of the present invention, all other embodiments obtained by persons of ordinary skill in the art without making creative efforts belong to the scope of protection of the present invention.

Unless the context requires otherwise, throughout the specification and claims, the word "comprise" and variations such as "include" and "have" should be construed in an open, inclusive sense, i.e. should be interpreted as "including, but not limited to".

The following will be combined with the accompanying drawings to describe the various embodiments of the present invention in detail, so as to more clearly understand the purpose, characteristics and advantages of the present invention. It should be understood that the embodiments shown in the accompanying drawings are not intended to limit the scope of the present invention, but are only intended to illustrate the essential spirit of the technical solution of the present invention.

References throughout the specification to "one embodiment" or "an embodiment" mean that a particular feature, structure, or characteristic described in connection with the embodiment is included in at least one embodiment. Thus, the appearance of "in one embodiment" or "in an embodiment" in various places throughout the specification are not necessarily all referring to the same embodiment. In addition, the particular features, structures, or characteristics may be combined in any manner in one or more embodiments.

As used in this specification and the appended claims, the singular forms "a", "an", and "the" include plural referents unless the context clearly dictates otherwise. It should be noted that the term "or" is generally employed in its sense including "and/or" unless the context clearly dictates otherwise.

In the following description, in order to clearly demonstrate the structure and working mode of the utility model, many directional words will be used for description, but the words "front", "back", "left", "right", "outside", "inside", "outward", "inward", "up", "down", etc. should be understood as convenient terms and should not be understood as restrictive terms.

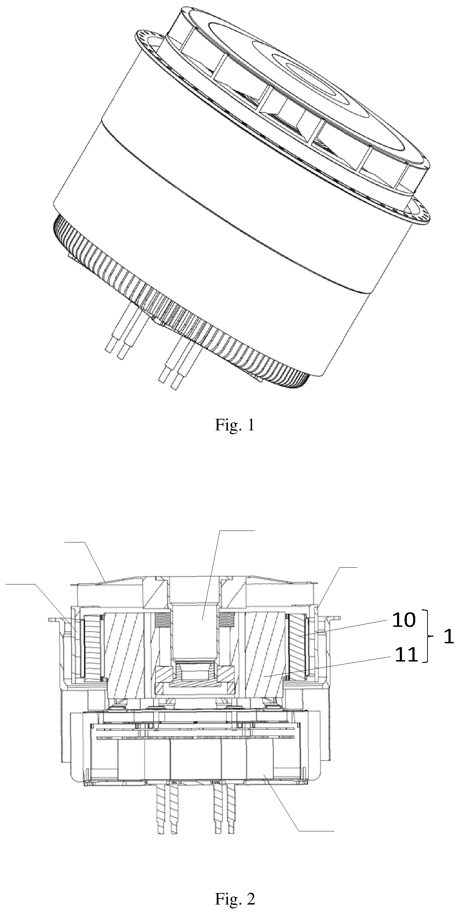

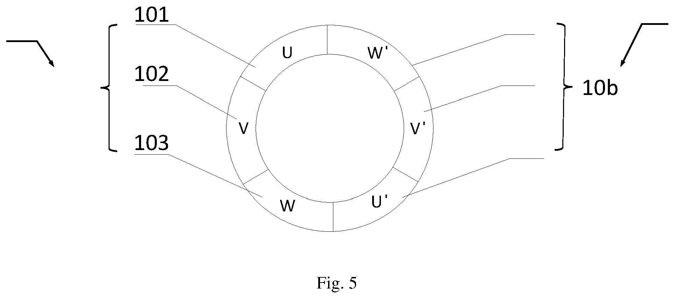

The embodiments of the invention are described below with reference to the accompanying drawings. As shown in FIG. 2 to FIG. 5, the power unit according to the embodiment of the invention comprises: a stator 1 and a rotor 2. The rotor 2 is arranged opposite to the stator 1. The rotor 2 includes a rotating shaft 21. The rotor 2 is rotatably connected to the stator 1 through the rotating shaft 21. The stator 1 includes a pair of stator magnetic assemblies 10 and a bearing sleeve 11. Each stator magnetic assembly 10 includes a plurality of stator magnetic units 100, and the stator magnetic units 100 are uniformly arranged circumferentially on the bearing sleeve 11. Specifically, the stator magnetic unit 100 comprises a combination of a plurality of iron core units 100a and coil units 100b, with the coil unit 100b arranged circumferentially within the iron core unit 100a. As shown in FIG. 5, the pair of stator magnetic assemblies 10 include a first stator magnetic assembly 10a and a second stator magnetic assembly 10b.

The first stator magnetic assembly 10a includes a first stator magnetic unit 101 to a third stator magnetic unit 103, and the second stator magnetic assembly 10b includes a fourth stator magnetic unit 104 to a sixth stator magnetic unit 106. The first stator magnetic unit 101 to the sixth stator magnetic unit 106 are arranged circumferentially adjacent to each other on the bearing sleeve 11. However, it should be understood that the arrangement order of the first stator magnetic unit 101 to the sixth stator magnetic unit 106 can also be implemented in other ways, and this is not specifically limited here. The rotor 2 includes multiple rotor magnetic units 20, which interact magnetically with each stator magnetic assembly 10 to provide a driving force for the rotor 2 to rotate relative to the stator 1. The first stator magnetic assembly 10a and the second stator magnetic assembly 10b can independently interact magnetically with the rotor magnetic units 20 of the rotor 2 to provide two independent power systems, working together to drive the rotor 2 to rotate relative to the stator 1. If one power system fails, the remaining system can still function normally. Moreover, since the heat dissipation area remains unchanged, the heat dissipation efficiency improves when operating with a single power output, increasing the single-motor output efficiency from the original 50% to 65%.

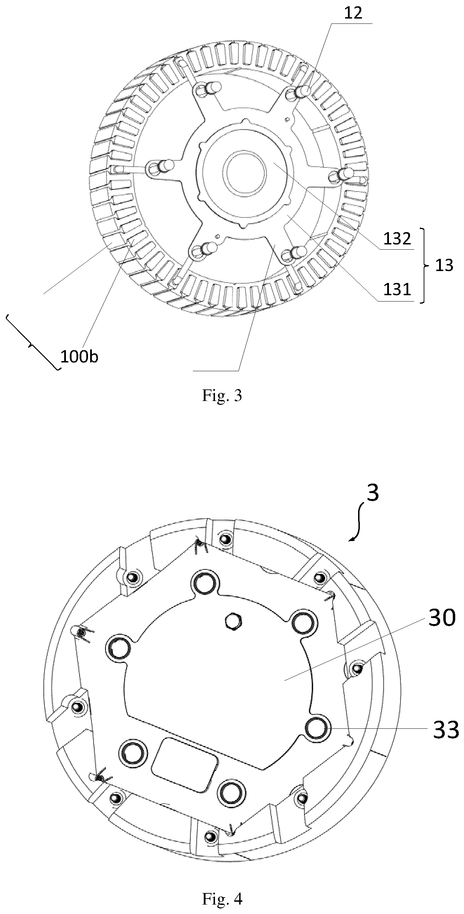

The power unit of the present invention further includes an ESC module 3, which is connected to the bearing sleeve 11 of the motor. The ESC module includes a pair of ESC units (not shown in the figure), namely a first ESC unit and a second ESC unit, located below a hexagonal power board 30 in Figure 4. The first ESC unit and the second ESC unit are connected one-to-one with the pair of stator magnetic assemblies 10 (i.e., the first stator magnetic assembly 10a and the second stator magnetic assembly 10b). Further, the stator 1 includes six terminal posts 12 correspondingly connected to each stator magnetic unit 100 (in this embodiment, the first stator magnetic unit 101 to the sixth stator magnetic unit 106). The ESC units include multiple ESC sockets 33 correspondingly arranged for each terminal post 12. When the ESC units are connected to the stator 1, the terminal posts 12 are inserted into the corresponding ESC sockets 33.

Further, the power unit of the present invention includes a stator base 13, which comprises a first part 131 and a second part 132. The first part 131 is connected to the bearing sleeve 11, and the second part 132 is connected to the rotating shaft 21. The first part 131 of the stator base 13 includes multiple extension brackets 133, each equipped with a guide sleeve. The terminal posts 12 pass through the guide sleeves of the extension brackets 133 to facilitate precise insertion into the corresponding ESC sockets 33.

Further, an end of the rotor 2 away from the terminal posts 12 is provided with a heat dissipation part 22, which dissipates heat from the stator 1 as it rotates with the rotor 2, thereby improving heat dissipation efficiency.

The present invention adopts a single-motor dual-winding design, integrating two power systems into one power unit. The two power systems are connected in parallel, allowing them to operate independently. If one power system fails, the remaining system can continue to function normally, thereby achieving a redundant power unit. This solves the problem of complete failure in single-motor power units when power is lost, improves the feasibility of the power unit, and enhances the reliability of the aircraft.

The present invention provides an aircraft, comprising the aforementioned power unit, wherein the power unit is arranged in an arm of the aircraft. The power unit of the aircraft in this embodiment adopts a single-motor dual-winding design, integrating two power systems into one power unit. The two power systems are connected in parallel, allowing them to operate independently. If one power system fails, the remaining system can continue to function normally, thereby achieving a redundant power unit. This solves the problem of complete failure in single-motor power units when power is lost, improves the feasibility of the power unit, and enhances the reliability of the aircraft.

The above embodiments are merely illustrative of the principles of the present invention and its effects, which is not intended to limit the invention. Any person skilled in the art can modify or alter the above embodiments without departing from the purpose and the scope of the present invention. Accordingly, all equivalent modifications or alterations made by persons having ordinary knowledge in the art, without departing from the purpose and technical ideas disclosed in the present invention, shall still be covered by the claims of the present invention.

## Claims

1. A power unit, comprising: a stator (1) comprising at least one pair of stator magnetic assemblies (10) and a bearing sleeve (11), each of the stator magnetic assemblies (10) comprises a plurality of stator magnetic units (100) and the stator magnetic units (100) are uniformly arranged circumferentially on the bearing sleeve (11); a rotor (2), arranged opposite to the stator (1) and rotatably connected to the stator, wherein the rotor (2) comprises a plurality of rotor magnetic units (20), the rotor magnetic units (20) of the rotor (2) are respectively interacting magnetically with each of the stator magnetic assemblies (10) to provide a driving force for the rotor (2) to rotate relative to the stator (1).

2. The power unit according to claim 1, further comprising an ESC module (3), wherein the ESC module (3) comprises at least one pair of ESC units, and the at least one pair of ESC units is connected one to one with the at least one pair of stator magnetic assemblies (10).

3. The power unit according to claim 1, wherein the at least one pair of stator magnetic assemblies (10) comprises a first stator magnetic assembly (10a) and a second stator magnetic assembly (10b), the first stator magnetic assembly (10a) comprises a first stator magnetic unit (101) to a third stator magnetic unit (103), the second stator magnetic assembly (10b) comprises a fourth stator magnetic unit (104) to a sixth stator magnetic unit (106), with the first stator magnetic unit (101) to the sixth stator magnetic unit (106) arranged circumferentially adjacent to each other on the bearing sleeve (11).

4. The power unit according to claim 2, wherein the stator (1) comprises a plurality of terminal posts (12) correspondingly connected to each of the stator magnetic units (100), and the ESC units comprise a plurality of ESC sockets (33) correspondingly arranged for each of the terminal posts (12), and the ESC units are configured such that when connected to the stator (1), the terminal posts (12) are inserted into the corresponding ESC sockets (33).

5. The power unit according to claim 4, wherein the rotor (2) comprises a rotating shaft (21), and the rotor (2) is rotatably connected to the stator (1) through the rotating shaft (21).

6. The power unit according to claim 5, further comprising a stator base (13), wherein the stator base (13) comprises a first part (131) and a second part (132), the first part (131) is connected to the bearing sleeve (11), and the second part (132) is connected to the rotating shaft (21).

7. The power unit according to claim 6, wherein the first part (131) of the stator base (13) comprises a plurality of extension brackets (133), each of the extension brackets (133) is provided with a guide sleeve, and the terminal posts (12) pass through the guide sleeves of the extension brackets (133).

8. The power unit according to claim 1, wherein the stator magnetic unit (100) comprises a combination of a plurality of iron core units (100a) and coil units (100b), with the coil units (100b) arranged circumferentially within the iron core units (100a).

9. The power unit according to claim 4, wherein an end of the rotor (2) away from the terminal posts (12) is further provided with a heat dissipation part (22), which dissipates heat from the stator (1) as it rotates with the rotor (2).

10. An aircraft, comprising the power unit according to any one of claims 1 to 9, wherein the power unit is arranged in an arm of the aircraft.
